# EUROPÄISCHE PATENTSCHRIFT

(11) **EP 2 212 164 B1**
(45) Veröffentlichungstag und Bekanntmachung des Hinweises auf die Patenterteilung: **15.02.2012**
(21) Anmeldenummer: 08802669.5
(22) Anmeldetag: 26.09.2008
(51) Int. Cl.: B60S 1/52, B05B 1/08, B05B 15/06

(54) **VORRICHTUNG ZUM BENETZEN EINER SCHEIBE**
APPARATUS FOR WETTING A GLASS PANE
DISPOSITIF POUR MOUILLER UNE VITRE

(30) Priorität: 17.10.2007 DE 102007049623
(43) Veröffentlichungstag der Anmeldung: 04.08.2010
(73) Patentinhaber: A. Raymond et Cie., 38000 Grenoble (FR)
(72) Erfinder: RATHEY, Markus, 79588 Efringen-Kirchen (DE); UTZ, Daniel, 79415 Bad Bellingen (DE)
(74) Vertreter: Rüttgers, Joachim
(86) Internationale Anmeldenummer: PCT/EP2008/008224
(87) Internationale Veröffentlichungsnummer: WO 2009/049759

(56) Entgegenhaltungen:
- EP-A- 1 629 896
- WO-A-2007/091249
- WO-A-2007/139891
- US-A1- 2006 226 266
- US-A1- 2006 278 738

## Beschreibung

Die Erfindung betrifft eine Vorrichtung zum Benetzen einer Scheibe, insbesondere einer Scheibe eines Kraftfahrzeugs, gemäß dem Oberbegriff des Patentanspruches 1.

Eine derartige Vorrichtung ist aus EP 1 629 896 A1 bekannt. Die gattungsgemäße Vorrichtung zum Benetzen einer Scheibe, insbesondere einer Scheibe eines Kraftfahrzeugs, verfügt über einen Einsatzkörper, an dem wenigstens eine Fluidleitung anschließbar ist und der einen Lagerkopf aufweist. Weiterhin ist ein in dem Lagerkopf eingefügter und in diesem drehbar sowie schwenkbar in einem Abstand von einer Rückwand unter Ausbilden eines Strömungsentspannungsraumes gehaltener Kugelkörper vorhanden, der eine Düsenanordnung trägt, mit der die Scheibe benetzbar ist. Die Düsenanordnung weist einen Düsenkörper auf, der über eine Vorkammer und eine sich an die Vorkammer anschließende, in einen Zentralkanal und in zwei beidseitig des Zentralkanales angeordnete Seitenarme unterteilte Strahlformkammer verfügt, um einen oszillierenden Fächerstrahl zu erzeugen, wobei in dem Kugelkörper ein Düsenaufnahmeraum ausgebildet ist.

Aus DE 89 05 635 U1, US 2006/226266 A1 und US 2006/0278738 A1 sind jeweils eine Vorrichtung zum Benetzen einer Scheibe, insbesondere einer Scheibe eines Kraftfahrzeugs, bekannt, die über einen Einsatzkörper verfügt, an den wenigstens eine Fluidleitung anschließbar ist und der einen hülsenartigen Lagerkopf aufweist. Weiterhin ist ein Kugelkörper vorhanden, der in den Lagerkopf eingefügt und in diesem drehbar sowie schwenkbar in einem Abstand von einer Rückwand unter Ausbilden eines Strömungsentspannungsraumes gehalten ist. Der Kugelkörper trägt eine Düsenanordnung, über die mit einem durchtretenden flüssigen Fluid die Scheibe benetzbar ist, wobei bei US 2006/226266 A1 und US 2006/0278738 A1 der Kugelkörper erzeugen zum einen oszillierenden Fächerstrahl ausgebildet ist und wobei in dem Kugelkörper ein Düsenaufnahmeraum ausgebildet ist.

Der Erfindung liegt die Aufgabe zugrunde, eine Vorrichtung der eingangs genannten Art anzugeben, der kostengünstig herzustellen ist, den Kugelkörper stabil lagert und einen oszillierenden Fächerstrahl mit strömungsdynamisch stabiler Charakteristik erzeugt.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung in dem Strömungsentspannungsraum eine Anzahl von Widerstandsvorsprüngen angeordnet sind, wird zum einen der Kugelkörper zusammen mit der Ringschulter in einem relativ großen Bereich mit einem gewissen radialen Abstand von der Innenwand des Lagerkopfes gehalten, so dass aufgrund des verhältnismäßig kleinflächigen Anlagebereiches des Kugelkörpers an der Innenwand des Lagerkopfes die Gefahr eines Festsitzens reduziert ist. Weiterhin wirken die Widerstandsvorsprünge als fluiddynamische Turbulatoren, die die Strömung in dem Strömungsentspannungsraum vor Eintritt in die Vorkammer des Düsenkörpers homogenisieren und somit zu stabilen strömungsdynamischen Verhältnissen zum Erzeugen des oszillierenden Fächerstrahles führen.

Weitere zweckmäßige Ausgestaltungen und Vorteile der Erfindung sind Gegenstand der Unteransprüche.

Weitere Vorteile der Erfindung ergeben sich aus der nachfolgenden Beschreibung eines Ausführungsbeispieles unter Bezug auf die Figuren der Zeichnung. Es zeigen:
- Fig. 1: in einer perspektivischen Explosionsansicht ein Ausführungsbeispiel einer erfindungsgemäßen Vorrichtung mit einem Einsatzkörper, mit einem Kugelkörper und mit einem Düsenkörper,
- Fig. 2: in einer perspektivischen Ansicht den Düsenkörper des Ausführungsbeispieles gemäß Fig. 1 und
- Fig. 3: das Ausführungsbeispiel gemäß Fig. 1 im Längsschnitt im Bereich eines Lagerkopfes des Einsatzkörpers.

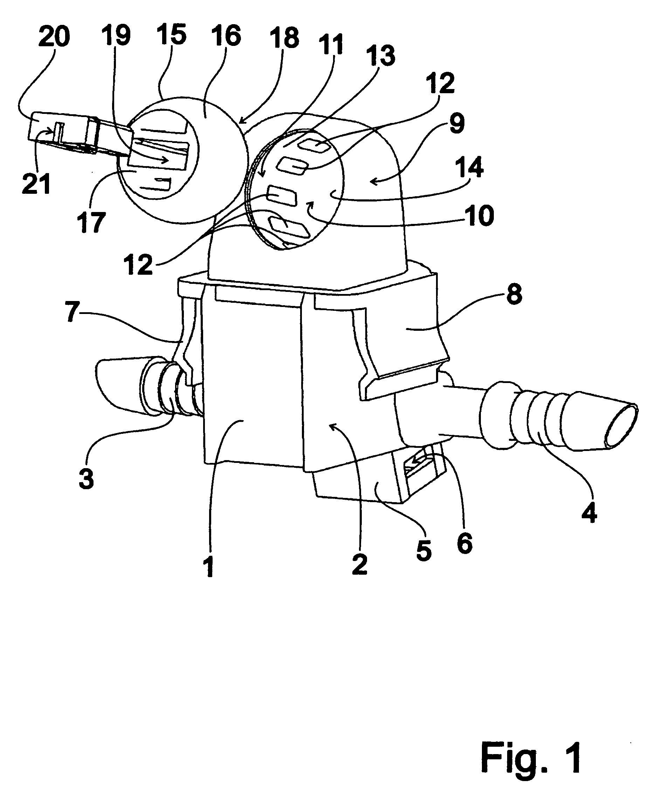

Fig. 1 zeigt in einer perspektivischen Explosionsansicht ein Ausführungsbeispiel einer erfindungsgemäßen Vorrichtung, die über einen aus einem hartelastischen Kunststoffmaterial hergestellten Einsatzkörper 1 verfügt. Der Einsatzkörper 1 weist einen in etwa quaderförmigen Sockelabschnitt 2 auf, an den an einander gegenüberliegenden Wandseiten jeweils ein Anschlussstutzen 3, 4 angeformt ist. Jeder Anschlussstutzen 3, 4 dient zum Verbinden mit einer Fluidleitung eines in Fig. 1 nicht dargestellten Fluidleitungssystems. Weiterhin ist an dem Sockelabschnitt 2 ein in der Ansicht von Fig. 1 rückseitig liegender, über ein Ende des Sockelabschnittes 2 überstehender Ventilarretierfortsatz 5 ausgebildet, in den eine in Fig. 1 nicht dargestellte Rückschlagventilanordnung einfügbar und über in dem Ventilarretierfortsatz 5 ausgebildete Rastausnehmungen 6 befestigbar ist. An dem dem Ventilarretierfortsatz 5 gegenüberliegenden Ende sind an dem Sockelabschnitt 2 an einander gegenüberliegenden Wandseiten in Richtung des Ventilarretierfortsatzes 5 weisende Rastzungen 7, 8 ausgebildet, die dazu eingerichtet sind, den Einsatzkörper 1 in einem in Fig. 1 nicht dargestellten Trägerteil zu fixieren.

Weiterhin ist der Einsatzkörper 1 mit einem kuppelartigen Lagerkopf 9 ausgebildet, der an dem dem Ventilarretierfortsatz 5 gegenüberliegenden Ende mit dem Einsatzkörper 1 verbunden ist. Der Lagerkopf 9 weist einen Aufnahmeraum 10 auf, der bis auf eine in der Darstellung gemäß Fig. 1 dem Betrachter zugewandte kreisförmige Fensteröffnung 11 nach außen geschlossen ist. In dem Aufnahmeraum 10 sind in einem Abstand von der Fensteröffnung 11 eine Anzahl von Widerstandsvorsprüngen 12 angeordnet, die gleichmäßig über die Umfangsrichtung an einer den Aufnahmeraum 10 begrenzenden Seitenwand 13 angeordnet sind und die sich als längliche Körper in einer von der Fensteröffnung 11 zu einer der Fensteröffnung 11 gegenüberliegenden Rückwand 14 des Lagerkopfes 9 erstrecken.

Weiterhin verfügt das in Fig. 1 dargestellte Ausführungsbeispiel der erfindungsgemäßen Vorrichtung über einen Kugelkörper 15, der an seiner Außenseite mit einer kugelschichtartigen, sich beidseitig eines Großkreises symmetrisch erstreckenden Mantelfläche 16 ausgebildet ist. Weiterhin weist der Kugelkörper 15 eine plane Stirnseite 17 sowie eine der in der Darstellung gemäß Fig. 1 dem Betrachter zugewandten Stirnseite 17 gegenüberliegende Rückseite 18 auf. In dem Kugelkörper 15 ist ein quaderförmiger Düsenaufnahmeraum 19 ausgebildet, der über seinen vollen Querschnitt in die Stirnseite 17 mündet.

Schließlich ist in Fig. 1 ein quaderförmiger Düsenkörper 20 als weiterer Bestandteil der erfindungsgemäßen Vorrichtung dargestellt, dessen Abmessungen den Dimensionen des Düsenaufnahmeraumes 19 entsprechen, so dass der Düsenkörper 20 so weit in den Düsenaufnahmeraum 19 einfügbar ist, dass ein an dem Düsenkörper 20 ausgebildeter Austrittsspalt 21 im Bereich der Stirnseite 17 liegt und der Düsenaufnahmeraum 19 von dem Düsenkörper 20 vollständig ausgefüllt ist.

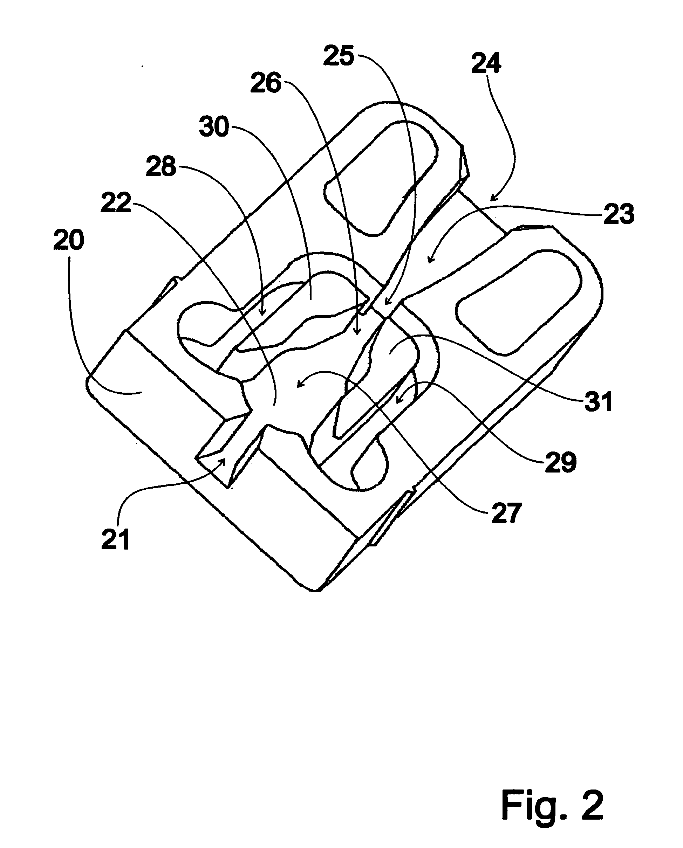

Fig. 2 zeigt in einer perspektivischen Ansicht den Düsenkörper 20 des Ausführungsbeispiels gemäß Fig. 1. Der Düsenkörper 20 ist, wie aus Fig. 2 ersichtlich, mit einer geschlossenen Deckseite 22 ausgebildet, die sich über die gesamte Grundfläche des Düsenkörpers 20 erstreckt. Aus Fig. 2 ist ersichtlich, dass der Düsenkörper 20 über eine dem Austrittsspalt 21 gegenüberliegende Vorkammer 23 verfügt, die bei diesem Ausführungsbeispiel mit einer dem Austrittsspalt 21 in Längsrichtung des Düsenkörpers 20 gegenüberliegenden, sich etwa über ein Viertel der Querseite des Düsenkörpers 20 symmetrisch zur Mittellängsachse erstreckende Eintrittsöffnung 24 ausgebildet ist. Die Vorkammer 23 verjüngt sich von der Eintrittsöffnung 24 kontinuierlich in Richtung einer der Eintrittsöffnung 24 gegenüberliegenden Austrittsöffnung 25, die eine fluidmechanische Verbindung zwischen der Vorkammer 23 und einer zwischen der Vorkammer 23 und dem Austrittsspalt 21 liegenden, unterteilten Strahlformkammer 26 schafft.

Die Strahlformkammer 26 ist mit einem sich von der Austrittsöffnung 25 in Richtung des Austrittsspaltes 21 symmetrisch zu der Mittellängsachse erstreckenden Zentralkanal 27 ausgebildet und weist beidseitig des Zentralkanales 27 liegende Seitenarme 28, 29 auf, die sich durch Trennblöcke 30, 31 von dem Zentralkanal 27 getrennt von der Austrittsöffnung 25 bogenförmig in Richtung des Austrittsspaltes 21 erstrecken und im Bereich des Austrittsspaltes 21 wieder in den Zentralkanal 27 münden, wobei in den Mündungsbereichen in den Zentralkanal 27 jeder Seitenarm 28, 29 seitlich nach außen weisende Ausbuchtungen aufweist. Der Zentralkanal 27 selbst erweitert sich von der Austrittsöffnung 25 in Richtung des Austrittsspaltes 21. Durch diese Ausgestaltung der Strahlformkammer 26 ist bei Beaufschlagen der Strahlformkammer 26 mit einem flüssigen Fluid in an sich bekannter Art und Weise durch Druckimpulsrückführung von der dem Austrittsspalt 21 zugewandten Seite des Zentralkanales 27 über die Seitenarme 28, 29 zu dem der Austrittsöffnung 25 zugewandten Bereich des Zentralkanales 27 ein mit einer bestimmten Frequenz oszillierender Fächerstrahl erzeugbar, der aus dem Austrittsspalt 21 des Düsenkörpers 20 austritt. Dabei ist bei diesem Ausführungsbeispiel die Abmessung der Vorkammer 23 in Längsrichtung des Düsenkörpers 20 kleiner als die Abmessung der Strahlformkammer 26 in Längsrichtung.

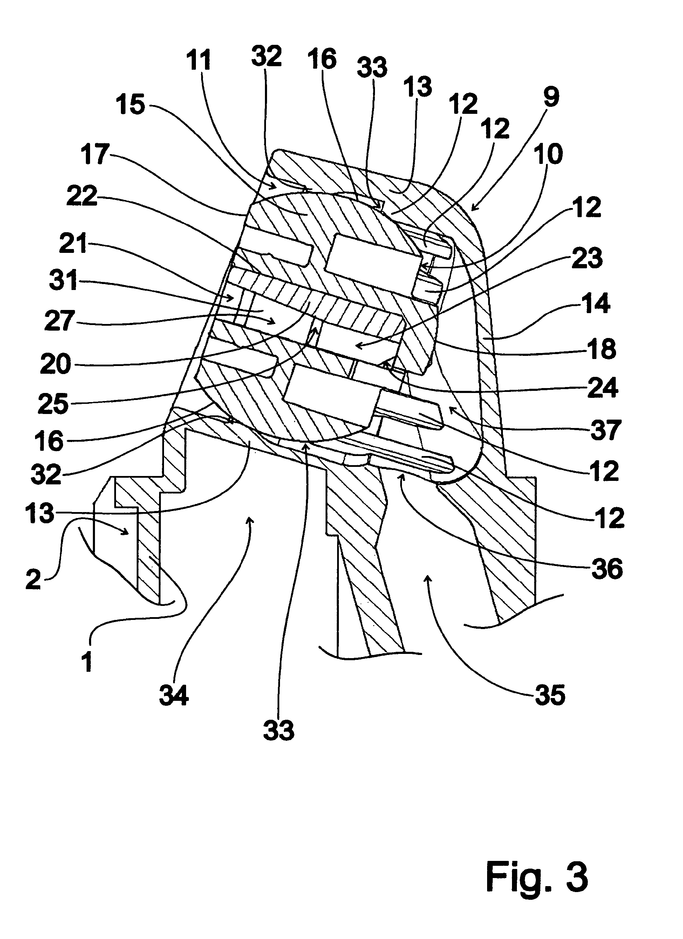

Fig. 3 zeigt in einem Längsschnitt den Einsatzkörper 1, den Kugelkörper 15 und den Düsenkörper 20 gemäß dem im Zusammenhang mit Fig. 1 und Fig. 2 erläuterten Ausführungsbeispiel einer erfindungsgemäßen Vorrichtung in zusammengefügter Anordnung im Bereich des Lagerkopfes 9. Aus Fig. 3 ist ersichtlich, dass der Aufnahmeraum 10 auf seiner der Fensteröffnung 11 zugewandten Seite über eine umlaufende Ringschulter 32 verfügt, an der die Mantelfläche 16 des Kugelkörpers 15 in einem der Mitte des Kugelkörpers 15 vorgelagerten Bereich anliegt. Die Seitenwand 13 tritt auf der der Rückwand 14 zugewandten Seite der Ringschulter 32 radial nach außen zurück, so dass zwischen der Seitenwand 13 und der Mantelfläche 16 ein Freibereich 33 ausgebildet ist. Weiterhin ist in der Darstellung gemäß Fig. 3 zu erkennen, dass die sich von der Rückseite 18 des Kugelkörpers 15 bis zu der Rückwand 14 des Lagerkopfes 9 als längliche Körper erstreckenden Widerstandsvorsprünge 12 an der der Fensteröffnung 11 abgewandten Seite an der Mantelfläche 16 des Kugelkörpers 15 anliegen, so dass der Kugelkörper 15 in dem Lagerkopf 9 drehbar und schwenkbar gehalten ist.

Weiterhin lässt sich Fig. 3 entnehmen, dass der Einsatzkörper 1 mit einem Heizungsaufnahmeraum 34 ausgebildet ist, der sich durch den Sockelabschnitt 2 erstreckt und an der den Aufnahmeraum 10 begrenzenden, in diesem Bereich mit verhältnismäßig geringer Materialstärke ausgebildeten Seitenwand 13 endet. In den Heizungsaufnahmeraum 34 ist ein in Fig. 3 nicht dargestelltes Heizelement einfügbar, um den Aufnahmeraum 10 sowie insbesondere ein in dem Aufnahmeraum 10 vorhandenes flüssiges Fluid, beispielsweise Waschwasser, zum Vermeiden eines Einfrierens zu erwärmen.

Benachbart des Heizungsaufnahmeraumes 34 ist ein sich von dem in Fig. 1 dargestellten Ventilarretierfortsatz 5 in den Sockelabschnitt 2 erstreckender, der Rückwand 14 benachbarter Fluideintrittsraum 35 ausgebildet, der über eine in einem verengten Mündungsbereich ausgebildete Verbindungsöffnung 36 mit einem zwischen der Rückwand 14 des Lagerkopfes 9 und der Rückseite 18 des Kugelkörpers 15 ausgebildeten Strömungsentspannungsraum 37 verbunden ist. Der Düsenkörper 20 ist dabei mit einem Winkel von mehr als 45 Grad gegenüber der Längsrichtung des Fluideintrittsraumes 35 abgewinkelt, um zusammen mit einem Versatz der Eintrittsöffnung 24 quer zu der Verbindungsöffnung 36 eine zur weiteren Strömungshomogenisierung führende Ablenkung des Fluids zu erzielen. In dem Strömungsentspannungsraum 37 als fluidmechanisch wirksamer Bereich des Aufnahmeraumes 10 sind die Widerstandsvorsprünge 12 angeordnet, die von dem Fluideintrittsraum 35 einströmendes Fluid verwirbeln und somit in dem Strömungsentspannungsraum 37 eine gewisse Homogenisierung der Strömung verursachen, bevor das Fluid über die Eintrittsöffnung 24 des Düsenkörpers 20 in dessen Vorkammer 23 eintritt.

Durch diese Strömungshomogenisierung des Fluids bereits in dem Strömungsentspannungsraum 37 ergibt sich die für eine zuverlässige Erzeugung eines oszillierenden Fächerstrahls in der Strahlformkammer 26 erforderlichen stabilen strömungsmechanischen Parameter an der Austrittsöffnung 25 bei einer insgesamt verhältnismä-βig kurzer Bauform des Lagerkopfes 9 in Längsrichtung des Düsenkörpers 20, da die Vorkammer 23 verhältnismäßig kurz ist.

Durch die fluidmechanische Beeinflussung der Strömung im Bereich der Widerstandsvorsprünge 12 ist weiterhin ein effizienter Wärme-übertrag von aus dem Heizungsaufnahmeraum 24 stammender Wärmeenergie in den Aufnahmeraum 10 und letztlich in das vor dem Einfrieren zu bewahrende Fluid gewährleistet.

## Patentansprüche

1. Vorrichtung zum Benetzen einer Scheibe, insbesondere einer Scheibe eines Kraftfahrzeugs, mit einem Einsatzkörper (1), an dem wenigstens eine Fluidleitung anschließbar ist und der einen Lagerkopf (9) aufweist, und mit einem in dem Lagerkopf (9) eingefügten und in diesem drehbar sowie schwenkbar in einem Abstand von einer Rückwand (14) unter Ausbilden eines Strömungsentspannungsraumes (37) gehaltenen Kugelkörper (15), der eine Düsenanordnung (20) trägt, mit der die Scheibe benetzbar ist, wobei die Düsenanordnung einen Düsenkörper (20) aufweist, der über eine Vorkammer (23) und eine sich an die Vorkammer (23) anschließende, in einen Zentralkanal (27) und in zwei beidseitig des Zentralkanales (27) angeordnete Seitenarme (28, 29) unterteilte Strahlformkammer (26) verfügt, um einen oszillierenden Fächerstrahl zu erzeugen, und wobei in dem Kugelkörper (15) ein Düsenaufnahmeraum (19) ausgebildet ist, **dadurch gekennzeichnet, dass** sich der Düsenaufnahmeraum (19) von einer Stirnseite (17) quer durch den Kugelkörper (15) erstreckt und an seiner dieser Stirnseite (17) gegenüberliegenden Rückseite (18) in den Strömungsentspannungsraum (37) mündet, dass der Lagerkopf (9) eine umfänglich umlaufende Ringschulter (32) aufweist, die im Bereich einer offenen Fensteröffnung (11) des Lagerkopfes (9) angeordnet ist, dass zwischen dem Lagerkopf (9) und dem Kugelkörper (15) auf der der Rückwand (14) zugewandten Seite der Ringschulter (32) ein radialer Abstand vorhanden ist und dass der Lagerkopf (9) eine Anzahl von der Ringschulter (32) auf der der Rückwand (14) zugewandten Seite gegenüberliegenden, an dem Kugelkörper (15) anliegende Widerstandsvorsprünge (12) aufweist, die in dem Strömungsentspannungsraum (37) angeordnet sind.

2. Vorrichtung nach Anspruch 1, **dadurch gekennzeichnet, dass** die Widerstandsvorsprünge (12) sich in Längsrichtung von der Rückseite (18) des Kugelkörpers (15) bis in Richtung der Rückwand (14) erstreckende längliche Körper sind.

3. Vorrichtung nach Anspruch 1 oder Anspruch 2, **dadurch gekennzeichnet, dass** der Düsenkörper (20) um mehr als etwa 45 Grad gegenüber der Längsrichtung eines in den Strömungsentspannungsraum (37) mündenden Fluideintrittsraum (35) ausgerichtet ist.

4. Vorrichtung nach Anspruch 3, **dadurch gekennzeichnet, dass** die Eintrittsöffnung (24) des Düsenkörpers (20) gegenüber einer Verbindungsöffnung (36) des Fluideintrittsraumes (35) versetzt angeordnet ist.

## Claims

1. Device for wetting a glass pane, in particular a glass pane of a motor vehicle, comprising an insert member (1) to which at least one fluid conduit can be connected and which has a bearing head (9) and a spherical member (15) inserted into and held both rotatably and pivotably in the bearing head (9) spaced apart from a rear wall (14) thereof such that a flow relaxation chamber (37) is formed, said spherical member (15) bearing a nozzle arrangement (20) by means of which the glass pane can be wetted, wherein the nozzle arrangement comprises a nozzle member (20) which comprises a front chamber (23) and a jet forming chamber (26) adjacent to the front chamber (23), divided into a central channel (27) and two side arms (28, 29) arranged either side of the central channel (27), in order to generate an oscillating fan-shaped jet and wherein a nozzle receptacle chamber (19) is formed in the spherical member (15), **characterised in that** the nozzle receptacle chamber (19) extends from a front side (17) transversely through the spherical member (15) and opens at the rear side (18) thereof opposing said front side (17) into the flow relaxation chamber (37), that the bearing head (9) has a peripherally extending annular shoulder (32) arranged in the region of an open window aperture (11) of the bearing head (9), that provided between the bearing head (9) and the spherical member (15) on the side of the annular shoulder (32) facing toward the rear wall (14) is a radial spacing, and that the bearing head (9) has a plurality of resistance projections (12), arranged in the flow relaxation chamber (37), which lie opposing the annular shoulder (32) on the side facing the rear wall (14) and lie against the spherical member (15).

2. Device according to claim 1, **characterised in that** the resistance projections (12) are elongate members extending in the longitudinal direction from the rear side (18) of the spherical member (15) in the direction toward the rear wall (14).

3. Device according to claim 1 or 2, **characterised in that** the nozzle member (20) is oriented by more than approximately 45 degrees relative to the longitudinal direction of a fluid entry chamber (35) opening into the flow relaxation chamber (37).

4. Device according to claim 3, **characterised in that** the entry aperture (24) of the nozzle member (20) is arranged offset relative to a connection aperture (36) of the fluid entry chamber (35).

## Revendications

1. Dispositif pour l'arrosage d'une vitre, notamment d'une surface vitrée d'un véhicule automobile, comprenant un élément encastré (1) auquel au moins une conduite de fluide peut être raccordée et qui comporte une tête formant portée d'appui (9), et comprenant un élément sphérique (15) inséré dans la tête formant portée d'appui (9) et maintenu dans celle-ci avec a possibilité de tourner ainsi que de pivoter, à une certaine distance de sa paroi postérieure (14) en définissant un espace de détente du flux d'écoulement (37), qui porte un dispositif formant buse de projection, au moyen duquel la vitre peut être arrosée, le dispositif formant buse de projection comportant en l'occurrence une buse de projection (20), qui se compose d'une chambre antérieure (23) et d'une chambre de profilage du jet de fluide (26) qui fait suite à la chambre antérieure (23) et qui consiste en un canal central (27) et en deux branches latérales (28, 29) disposées de part et d'autre du canal central (27), servant à produire un jet de fluide de forme évasée oscillant, et un gabarit d'insertion de buse (19) étant en l'occurrence ménagé dans l'élément sphérique (15), **caractérisé en ce que** le gabarit de logement de la buse (19) s'étend depuis une face antérieure (17) suivant une disposition oblique au travers de l'élément sphérique (15) et débouche, au niveau de fa face arrière (18) opposée à cette face antérieure (17), dans l'espace de détente d'écoulement (37), **en ce que** la tête formant portée d'appui comporte un épaulement annulaire (32) sur toute sa périphérie, qui est ménagé dans la zone d'une ouverture formant fenêtre ouverte (11) de la tête formant portée d'appui (9), **en ce qu'**il existe, entre la tête formant portée d'appui (9) et l'élément sphérique (15), un intervalle d'écartement radial sur le côté de l'épaulement annulaire (32) qui est orienté vers la paroi postérieure (14), et **en ce que** la tête formant portée d'appui (9) est munie d'un certain nombre de protubérances de résistance par friction (12) opposées au côté de l'épaulement annulaire qui est orienté vers la paroi postérieure (14), attenantes à l'élément sphérique (15), qui sont disposées dans l'espace de détente du flux d'écoulement (37).

2. Dispositif selon la revendication 1, **caractérisé en ce que** les protubérances de résistance par friction (12) se présentent sous la forme d'éléments oblongs s'étendant depuis la face arrière (18) de l'élément sphérique (15) jusque dans la direction de la paroi postérieure (14).

3. Dispositif selon la revendication 1 ou la revendication 2, **caractérisé en ce que** la buse de projection (20) est positionnée à plus de 45 degrés environ par rapport au sens longitudinal de l'espace d'entrée du fluide (35) débouchant dans l'espace de détente du flux d'écoulement (37).

4. Dispositif selon la revendication 3, **caractérisé en ce que** l'ouverture d'entrée (24) de la buse (20) est disposée déportée par rapport à l'ouverture (36) de mise en communication avec l'espace d'entrée du fluide (35).
